# EUROPEAN PATENT SPECIFICATION

(11) **EP 0 441 619 B1**
(45) Date of publication and mention of the grant of the patent: **28.09.1994**
(21) Application number: 91300987.4
(22) Date of filing: 06.02.1991
(51) Int. Cl.: F16L 47/00

(54) **Flanged pipe joints**
Flansch-Rohrverbindung
Raccord de tuyaux à brides

(30) Priority: 09.02.1990 GB 9003024; 15.03.1990 GB 9005835
(43) Date of publication of application: 14.08.1991
(73) Proprietor: VICTAULIC PLC, Hitchin Hertfordshire SG4 0AP (GB)
(72) Inventor: Headford, Alan Lloyd, Bedford, Bedfordshire MK40 2BD (GB)
(74) Representative: Heath, Peter William Murray

(56) References cited:
- EP-A- 0 221 395
- DE-A- 2 143 766
- DE-A- 2 900 773
- US-A- 3 082 022

## Description

This invention relates to joints and couplings by means of flange interconnection between pipes for use in a liquid or gas pipe work system, and parts of such joints and couplings.

More particularly, the invention relates to such joints and couplings involving at least one plastics pipe having a stub flange. Such stub flanges may be provided to enable plain ended plastics pipes to be connected to flange ended pipes, and may be joined to the plain ended pipes by butt welding for example.

It is to be understood that by the expression "pipe" as used herein is meant any pipe-like member such as a pipe as such, and additionally pipe fittings such as "T" junctions, elbows, bends, reducers, and valve inlets, for example.

Plastics stub flanged pipes are provided at their free ends with radially outwardly extending stub flanges adapted to abut against the flanges of other pipes by means of connecting means disposed radially outside the stub flanges. Thus, stub flanged pipes are commonly adapted to be connected to other stub flanged pipes by means of annular backing rings disposed about the pipes behind the stub flanges and connected together. The backing rings may comprise separate elements drawn together with securing means such as bolts, or may be formed by parts of surrounding sleeve-like coupling member. Such plastics pipes, and particularly such plastics stub flanged pipes are commonly formed of polyethylene.

Stub flanges on plastics pipes are advantageous over wider flanges arranged to be interconnected by bolts passing through circumferentially arranged bores therein, in that there is no circumferential pipe alignment requirement on interconnection, and sealing problems related to flexibility of the plastics material between the bolts can be substantially reduced.

Joints using plastics stub flanges must, for safe usage in the conveyance of liquid and gases, be capable of adequate resistance to forces along the length of the plastics pipes tending to "pull out" one or both of the pipes from the coupling. In practice this presents considerable problems in view of the relatively deformable character of the material concerned in that inward radial forces induced at the stub flanges of the pipes by the backing rings during the application of longitudinal forces to the plastic pipes leads to a radially inward force (toward the pipe axis) on the pipe stub flanges and movement of the shoulders of the plastics stub flanges, such that the stub flanges distort excessively and can ultimately pull through their associated backing rings.

Reference is hereby made to D-A-2900773. This specification relates to couplings for and joints of stub flanged pipes, of a generally similar nature to that to which the invention of the present application relates, and, amongst other things, discloses a joint between two pipes with means for connecting the two pipes to urge together the mating surfaces of stub flanges thereof. However it is to be noted that the disclosure of this citation does not in any way teach or suggest any solution to the problems hereinabove described.

It is an object of the present invention to overcome or at least substantially reduce the above mentioned problems.

In accordance with one aspect of the present invention there is provided a joint between two pipes at least one of which is a plastics pipe, the pipes having at their facing ends outwardly extending annular flanges providing mating surfaces between the two pipes generally normal to the direction of the pipes; means for connecting the two pipes to urge together the mating surfaces of the flanges; the flange of the plastics pipe or at least one of the plastics pipes being a stub flange; characterised in that the or each stub flange carries an annular supporting hoop of relatively rigid material whereby to assist the or each stub flanged plastics pipe resisting radially inward forces, the hoop being disposed in an annular groove in the mating face of the or each stub flange of the or each plastics pipe.

In one embodiment of the invention both flanged pipes may be stub flanged pipes formed of plastics materials, in which case a pair of annular backing rings may be disposed one about each of the plastics pipes and abutting behind the stub flanges of the plastics pipes, the backing rings being adapted for connection one with the other, and the juxtaposed flanges of the plastics pipes containing at least one annular supporting hoop of relatively rigid material.

Where the joint is between two such plastics pipes, a single supporting hoop may be located in juxtaposed annular grooves in the mating surfaces of the stub flanges, the single hoop bearing against the appropriate radially outer facing surfaces of the groove in order to provide support and assist both plastics pipe stub flanges resist radially inward forces. Alternatively, and applicable more generally, the or each stub flange of a plastics flange pipe may be provided with a separate hoop, disposed in an annular groove in the mating face of the flange, and the supporting hoop may in this instance have a surface generally flush with the mating face of the flange. The supporting hoop may be in the form of a flat faced annular disc. More generally the hoop may be of any desired configuration appropriate for its purpose, and of any appropriate material providing significantly greater strength than the pipe stub flange alone.

Each backing ring may comprise a separate annular ring provided with bores by means of which the backing ring may be connected to an associated backing ring located behind the stub flange of a corresponding plastics flanged pipe by, for example, bolts through complimentary bores in the backing rings. Alternatively, the backing ring may be connected to the flange of a steel or iron pipe for example by means of bolts, for example, passing through the bores in the backing ring and corresponding bores in the juxtaposed flange of the steel or iron flange pipe.

Again where the joint is between two plastics stub flanged pipes, the backing rings may comprise the side walls of a sleeve-like coupling member, such as that sold under the name "VICTAULIC" (Registered Trade Mark), in which case the axially rear surfaces of the stub flanges are shaped to conform to the internal configuration of the sleeve coupling, and the sleeve is placed around the stub flanges of the plastics pipes in such a manner that the side walls locate firmly one behind each of the two stub flanges of the plastics pipes.

Where separate supporting hoops are used with respect to each plastics pipe in a mating face groove thereof, gasket face seals may be incorporated in the joint between the mating surfaces of the connected pipes in normal manner. Where however one supporting hoop is "shared" between two pipes within the juxtaposed grooves thereof, a sealing gasket may be fitted radially inwardly of the hoop, and may comprise a gasket of known lipseal characteristics. This may be fitted within the grooves containing the hoop, and may in some embodiments be combined with the hoop. Such an arrangement has the added advantage of increasing the isolation of the supporting hoop from the contents of the pipe during use thereof, which with some applications of pipes, where the supporting hoop is of an abradable or corrodible material, can be a considerable advantage. The supporting hoop may be of metal and may be a machined and/or stamped, or laser cut, steel component for example. To resist corrosion, a galvanised or plastic polymer coating may be provided for the supporting hoop. Such a coating in practice would, with the invention, prove durable to a high degree because of negligible abrasive wear since the component is well away from the main stream of materials flowing through the pipe.

Where the supporting hoop lies in the mating face of the stub flange, arrangements may be provided for holding it captive within its groove. This may be done by means of a chamfered edge on the radially outer periphery of the supporting hoop inclined radially outwardly away from the mating face of the flange abutting a similarly inclined radially outer wall of the groove. Alternatively, the radially outer perimeter of the supporting hoop may be provided with appropriately configured knurling to engage the radially outer wall of the groove. It is to be noted that the means for holding the hoop captive in the groove are on the radially outer perimeter in order that when subject to joint separation forces, these apply to the outer periphery of the hoop particularly which remains planar and does not "dish". Supporting hoops of this kind can be pressed into the appropriate groove, or moulded in during formation of the stub flange.

In practice the supporting hoop is set at as large a diameter as possible within the stub flange of the plastics pipe consistent with the practical needs for plastics material in the stub flange radially outwardly of the supporting hoop. The provision of the hoop in the flange ensures that there is no loss of pipe wall thickness as such, so that weakness potential with such loss in thickness is avoided. Also the essential slimness of the hoop leads to minimal loss of axial section thickness of the flange stub and therefore its resistance to radially inward loads.

A joint between pipes as just described will enable the reduction of certain dimensions of the coupling assembly, such as backing ring thickness, strength, and outside diameter, and the dimensions of the bolts used for connecting such backing rings. Again the pitch circle diameter can be reduced, and the stub pipe flange outside diameter reduced. In practical terms the reduction of the stub pipe flange outside diameter may be arranged to be sufficient to allow the provision of backing rings having a pitch circle diameter capable of allowing connection between iron or steel flange pipes of standard configuration and stub flanged polyethylene pipe having the same bore. In practical terms this is of very considerable commercial usefulness.

In accordance with another aspect of the present invention there is provided a plastics pipe having at one end an outwardly extending annular stub flange having a mating surface for abutment, in use, with the corresponding mating surface of another flanged pipe, said mating surface being generally normal to the direction of the pipe; characterised in that the stub flange of the plastics pipe carries an annular supporting hoop of relatively rigid material whereby to assist, in use of the flanged plastics pipe when connected to another stub flanged pipe, resistance to radially inward forces within the plastics stub flange, the hoop being disposed in an annular groove in the mating face of the stub flange of the plastics pipe.

In order that the present invention may be more readily understood two embodiments thereof will now be described by way of example with reference to the accompanying drawings in which:-
Figure 1 is a sectional schematic elevation showing half of a joint between two plastics stub flanged pipes by means of separate steel backing rings, all in accordance with the invention; and
Figure 2 is a similar sectional elevation of part of a joint between two plastics stub flanged pipes by means of a side wall sleeved coupling, again utilizing the invention.

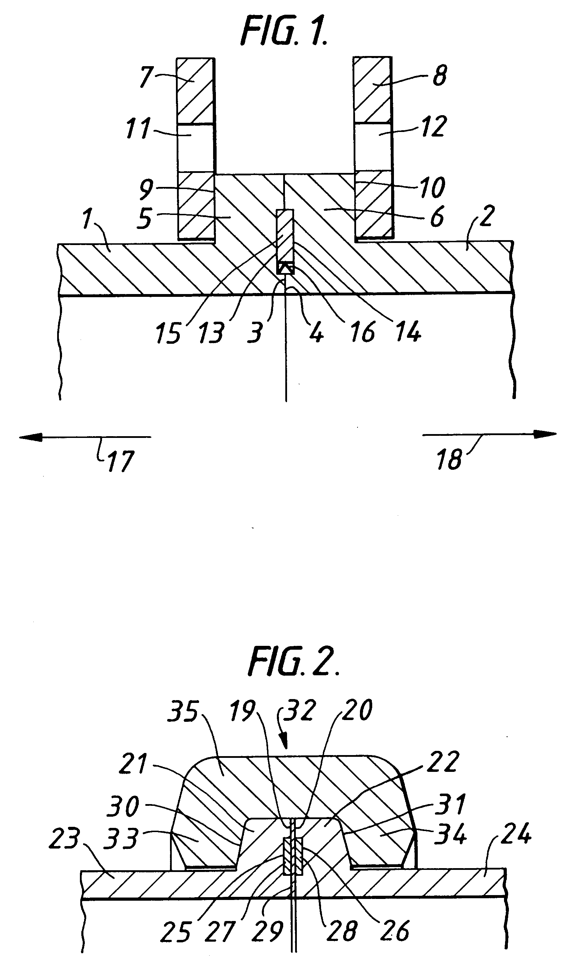

Referring to Figure 1 it will be seen that two stub flanged polyethylene pipes 1,2 are located with the mating faces 3,4 of their stub flanges 5,6 abutting.

Steel backing rings 7,8 are located about the pipes, behind and bearing against the back faces 9,10 of the stub flanges. The rings are rotatable about the pipes and have bores 11,12 for the receipt of interconnecting bolts (not shown), which with attached nuts (not shown) firmly secure the joint between the pipes together.

The stub flanges 5,6, are provided in their mating faces 3,4 with matching juxtaposed annular grooves 13,14 within which is located a single supporting hoop of mild steel 15, radially inwardly of which, within the grooves 13,14, is disposed a lipseal 16 to prevent any liquid or gas from within the pipes coming into contact with the steel supporting hoop 15, or escaping from the joint between the two pipes.

In practice, upon tightening together the two backing rings 7,8 by means of nuts and bolts between them, the joint between the two pipes is firmly and securely and sealingly formed.

Any forces on the pipes along the directions 17,18 of the pipes resulting from tensile end loading will tend to lead to radially inward forces upon the flanges 5,6 of the stub pipes, which in turn will tend to urge the pipes radially inwards with the potential risk of the pipe flanges jumping under one or other of the backing rings 7,8. Such radially inward forces are strongly resisted by the supporting hoop 15, leading to a far more secure pipe joint.

Tests have been carried out on polyethylene stub flanged pipes for pipe of 125 mm outside diameter, the stub flange mating faces of which have been machined to provide grooves able to accept 3 mm thick flat mild steel disc supporting hoops. Such an arrangement is similar to that illustrated in Figure 1 and hereinabove described except that in this test example, a steel supporting hoop was provided in each juxtaposed groove in the mating faces of the flanges. This arrangement was used with a flange face gasket seal of known kind. Tensile end loading to provide "pull-out" tests with this assembly have proved highly successful.

Figure 2 illustrates an alternative embodiment of the invention in which the mating faces 19,20 of the stub flanges 21,22 of polyethylene stub flanged pipes 23,24 have both been provided with grooves 25,26 within each of which is located an annular planar supporting hoop 27,28 whose outer surface is flush with the flange mating surfaces 19,20 and between which is located a face gasket seal 29 of known kind. The back faces 30,31 of the stub flanges 21,22 have been machined so as to closely fit a "VICTAULIC" (Registered Trade Mark) coupling housing 32 fitted about the flanges and capable of turning therearound before tightening. The housing has a thick walled sleeve 35 and end walls 33,34 which serve as backing rings which engage upon the back faces 30,31 of each of the two flanges and firmly hold together the joint according to the invention.

The invention as illustrated and described hereinabove is advantageous in many ways, including the following:-
(a) Manufacturing is relatively simple and of low cost. Stub flanges are normally produced by injection moulding or another forming operation and the provision of a mating surface groove presents no especial difficulty.
(b) The hoop support ring may be emplaced or removed at will. This enables, for example, the use of a single thick support ring and lip seal between two abutting flange faces, the ring residing partly, and equally, in the two abutting grooves. Or alternatively, the use of two separate thin support rings and a conventional flange-face gasket may be used. Again, most importantly, a single thin support ring and conventional flange-face gasket may be used, if the opposing flange is a metal flange as in a part of a metal valve or casting, or metal pipe. By such means, great flexibility of use is available. In addition, the material of the support ring may be chosen to suit the pipe end use, e.g. stainless steel for water or mild steel for gas.
(c) The flange integrity is not compromised. This is important for a flange from polyethylene, where adhesion from polyethylene to metal to polyethylene would be very difficult. By placing the reinforcement at the flange face this problem is avoided.
(d) The exposed hoop support ring may be of relatively narrow circumferential width, and cover no more than 50% of the flange face. This allows effective sealing to be provided by a conventional flange-face gasket seal that covers both the exposed support ring and surrounding flange. This arrangement ensures an effective seal to both sides of the support ring.

## Claims

1. A joint between two pipes (1,2,23,24), at least one of which is a plastics pipe, the pipes having at their facing ends outwardly extending annular flanges (5,6,21,22) providing mating surfaces (3,4,19,20) between the two pipes generally normal to the direction of the pipes; means (7,8,35) for connecting the two pipes to urge together the mating surfaces of the flanges; the flange (5,6,21,22) of the plastics pipe (1,2,23,24) or at least one of the plastics pipes being a stub flange; characterised in that the or each stub flange (5,6,21,22) carries an annular supporting hoop (15,27,28) of relatively rigid material whereby to assist the or each stub flanged plastics pipe resisting radially inward forces, the hoop (15,27,28) being disposed in an annular groove (13,14,25,26) in the mating face (3,4,19,20) of the or each stub flange (5,6,21,22) of the plastics pipe or pipes (1,2,23,24).

2. A joint as claimed in Claim 1 characterised in that each flanged pipe (1,2,23,24) is a plastics pipe and each flange (5,6,21,22) is a stub flange carrying an annular supporting hoop (15,17,28) disposed in an annular groove (13,14,25,26).

3. A joint as claimed in claim 1 or 2 characterised in that the annular groove (13,14) in the mating surface (19,20) of the or each stub flange (21,22) is provided with a separate hoop (27,28), one surface of which lies generally flush with the mating face of the stub flange (21,22).

4. A joint as claimed in claim 2 characterised by a single supporting hoop (15) located in juxtaposed annular grooves (13,14) in the mating surfaces (3,4) of the two stub flanges (5,6).

5. A joint as claimed in any one of the preceding claims characterised in that the or each supporting hoop (5,6,21,22) is in the form of a flat faced annular disc.

6. A joint as claimed in Claim 5 characterised in that sealing means (16,29) are incorporated in the joint between the mating faces (3,4,19,20) of the connected pipes (1,2,23,26) radially inwardly of the annular grooves (13,14,25,26).

7. A joint as claimed in any one of the preceding claims characterised in that the or each hoop (15,27,28) is so dimensioned as to bear against radially outer surfaces of the or each groove (13,14,25,26).

8. A joint as claimed in Claims 5, 6 or 7 characterised in that the radially outer periphery of the or each supporting hoop (15,27,28) is provided with a chamfered edge inclined radially outwardly away from the mating face (3,4,9,20) of the flange (5,6,21,22) and abuts a similarly inclined radially outer wall of the groove.

9. A joint as claimed in Claims 5, 6 or 7 characterised in that the radially outer perimeter of the or each supporting hoop (15,27,28) is provided with retaining means to engage the radially outer wall of the groove (13,14,25,26).

10. A joint as claimed in any one of the preceding claims characterised by an annular backing ring (7,8,32) disposed about the or each stub flange plastics pipe (1,2,23,24) and abutting behind the stub flange (5,6,21,22) thereof, the or each backing ring being adapted for connection with the backing ring of the other stub flange, or the flange of the other pipe as the case may be.

11. A joint as claimed in Claim 10 characterised in that the or each backing ring (7,8,32) comprises a separate annular ring (7,8) provided with bores (11,12) for the receipt of tightening means for drawing the backing ring (7,8) against its associated stub flange (5,6).

12. A joint as claimed in Claim 10 wherein both pipes (23,24) comprise plastics pipes with stub flanges (21,22) and utilising a coupling (32) having a sleeve-like member (35) and radially inwardly directed skirt-like side walls (33,34) characterised in that the backing rings are comprised by the side walls (33,34) of the sleeve-like coupling member (35), the axially rear surfaces (31,32) of the stub flanges (21,22) being shaped to conform to the internal configuration of the sleeve coupling (32), the sleeve being placed around the stub flanges (21,22) of the plastics pipes (23,24) in such a manner that the side walls locate firmly one behind each of the two stub flanges (21,22) of the plastics pipes (23,24).

13. A plastics pipe (1,2,23,24) having at one end an outwardly extending annular stub flange (5,6,21,22) having a mating surface (3,4,19,20) for abutment, in use, with the corresponding mating surface of another flanged pipe, said mating surface being generally normal to the direction of the pipe; characterised in that the stub flange of the plastics pipe carries an annular supporting hoop (15,27,28) of relatively rigid material whereby to assist, in use of the stub flanged plastics pipe when connected to another flanged pipe, resistance to radially inward forces within the plastics stub flange, the hoop being disposed in an annular groove (13,14,25,26) in the mating face (3,4,19,20) of the stub flange (5,6,21,27) of the plastics pipe (1,2,23,24).

14. A plastics pipe (1,2,23,24) as claimed in Claim 13 characterized in that there is provided an annular backing ring (7,8,32) disposed about the stub flanged plastics pipe and abutting behind the flange thereof, the backing ring (7,8,32) being adapted for connection with a flange of another pipe or a similar backing ring of another stub flanged pipe.

## Patentansprüche

1. Verbindung zwischen zwei Rohren (1, 2, 23, 24), von denen mindestens eines ein Kunststoffrohr ist, wobei die Rohre an ihren einander zugewandten Enden sich nach außen erstreckende Ringflansche (5, 6, 21, 22), die zur Richtung der Rohre allgemein normale Berührungsflächen (3, 4, 19, 20) zwischen den Rohren bieten, und Mittel (7, 8, 35) zum Verbinden der beiden Rohre haben, um die Berührungsflächen der Flansche zusammenzutreiben, wobei der Flansch (5, 6, 21, 22) des Kunststoffrohrs (1, 2, 23, 24) oder mindestens eines der Kunststoffrohre ein Stummelflansch ist, dadurch gekennzeichnet, daß der oder jeder Stummelflansch (5, 6, 21, 22) einen ringförmigen Stützreif (15, 27, 28) aus relativ starrem Material trägt, um dadurch dem oder jedem Kunststoffrohr mit Stummelflansch zu helfen, radial nach innen gerichteten Kräften standzuhalten, wobei der Reif (15, 27, 28) in einer Ringnut (13, 14, 25, 26) in der Berührungsfläche (3, 4, 19, 20) des oder jedes Stummelflansches (5, 6, 21, 22) des Kunststoffrohrs oder der Kunststoffrohre (1, 2, 23, 24) angeordnet ist.

2. Verbindung gemäß Anspruch 1, dadurch gekennzeichnet, daß jedes Flanschrohr (1, 2, 23, 24) ein Kunststoffrohr und jeder Flansch (5, 6, 21, 22) ein Stummelflansch ist, der einen in einer Ringnut (13, 14, 25, 26) angeordneten ringförmigen Stützreif (15, 17, 28) trägt.

3. Verbindung gemäß Anspruch 1 oder 2, dadurch gekennzeichnet, daß die Ringnut (13, 14) in der Berührungsfläche (19, 20) des oder jedes Stummelflansches (21, 22) mit einem separaten Reif (27, 28) versehen ist, dessen eine Oberfläche mit der Berührungsfläche des Stummelflansches (21, 22) allgemein bündig ist.

4. Verbindung gemäß Anspruch 2, dadurch gekennzeichnet, daß sich in nebeneinanderliegenden Ringnuten (13, 14) in den Berührungsflächen der zwei Stummelflansche (5, 6) ein einzelner Stützreif (15) befindet.

5. Verbindung gemäß einem der vorhergehenden Ansprüche, dadurch gekennzeichnet, daß der oder jeder Stützreif (5, 6, 21, 22) die Form einer flachseitigen ringförmigen Scheibe hat.

6. Verbindung gemäß Anspruch 5, dadurch gekennzeichnet, daß in die Verbindung zwischen den Berührungsflächen (3, 4, 19, 20) der verbundenen Rohre (1, 2, 23, 26) von den Ringnuten (13, 14, 25, 26) radial nach innen Dichtungsmittel (16, 29) eingebaut sind.

7. Verbindung gemäß einem der vorhergehenden Ansprüche, dadurch gekennzeichnet, daß der oder jeder Reif (15, 27, 28) so bemessen ist, daß er gegen radial äußere Oberflächen der oder jeder Nut (13, 14, 25, 26) anliegt.

8. Verbindung gemäß Anspruch 5, 6 oder 7, dadurch gekennzeichnet, daß die radial äußere Außenfläche des oder jedes Stützreifs (15, 27, 28) mit einer radial nach außen, von der Berührungsfläche (3, 4, 9, 20) des Flansches (5, 6, 21, 22) weg geneigten abgeschrägten Kante versehen ist und an eine ähnlich geneigte radial äußere Wand der Nut anstößt.

9. Verbindung gemäß Anspruch 5, 6 oder 7, dadurch gekennzeichnet, daß der radial äußere Umfang des oder jedes Stützreifs (15, 27, 28) mit Haltemitteln zum Eingriff in die radial äußere Wand der Nut (13, 14, 25, 26) versehen ist.

10. Verbindung gemäß einem der vorhergehenden Ansprüche, dadurch gekennzeichnet, daß ein ringförmiger Verstärkungsring (7, 8, 32) um das oder jedes Stummelflansch-Kunststoffrohr (1, 2, 23, 24) angeordnet ist und hinter dem Stummelflansch (5, 6, 21, 22) davon anstößt, wobei der oder jeder Verstärkungsring zur Verbindung mit dem Verstärkungsring des anderen Stummelflansches oder des Flansches des anderen Rohres, je nach dem vorliegenden Fall, angeglichen wird.

11. Verbindung gemäß Anspruch 10, dadurch gekennzeichnet, daß der oder jeder Verstärkungsring (7, 8, 32) einen mit Bohrungen (11, 12) zur Aufnahme von Spannmitteln zum Ziehen des Verstärkungsrings (7, 8) gegen seinen zugehörigen Stummelflansch (5, 6) versehenen separaten Ring mit kreisförmigem Querschnitt (7, 8) umfaßt.

12. Verbindung gemäß Anspruch 10, wobei beide Rohre (23, 24) Kunststoffrohre mit Stummelflanschen (21, 22) umfassen und eine Kupplung (32) mit einem hülsenähnlichen Element (35) und radial nach innen gerichtete kragenähnliche Seitenwände (33, 34) genutzt wird, dadurch gekennzeichnet, daß die Verstärkungsringe aus den Seitenwänden (33, 34) des hülsenähnlichen Kupplungselements (35) bestehen, wobei die axial hinteren Oberflächen (31, 32) der Stummelflansche (21, 22) der inneren Konfiguration der Hülsenkupplung (32) entsprechend geformt sind und die Hülse so um die Stummelflansche (21, 22) der Kunststoffrohre (23, 24) gelegt wird, daß je eine der Seitenwände fest hinter jedem der beiden Stummelflansche (21, 22) der Kunststoffrohre (23, 24) sitzt.

13. Kunststoffrohr (1, 2, 23, 24), das an einem Ende einen sich nach außen erstreckenden ringförmigen Stummelflansch (5, 6, 21, 22) mit einer Berührungsfläche (3, 4, 19, 20) zum Anliegen, im Einsatz, an die entsprechende Berührungsfläche eines anderen Flanschrohres hat, wobei die genannte Berührungsfläche allgemein normal zur Richtung des Rohres ist, dadurch gekennzeichnet, daß der Stummelflansch des Kunststoffrohres einen ringförmigen Stützreif (15, 27, 28) aus relativ starrem Material trägt, um dadurch, wenn das Kunststoffrohr mit Stummelflansch im Einsatz mit einem anderen Flanschrohr verbunden ist, den Widerstand gegen radial nach innen gerichteten Kräften innerhalb des Kunststoffstummelflansches zu unterstützen, wobei der Reif in einer Ringnut (13, 14, 25, 26) in der Berührungsfläche (3, 4, 19, 20) des Stummelflansches (5, 6, 21, 27) des Kunststoffrohrs (1, 2, 23, 24) angeordnet ist.

14. Kunststoffrohr (1, 2, 23, 24) gemäß Anspruch 13, dadurch gekennzeichnet, daß ein um das Stummelflansch-Kunststoffrohr herum angeordneter und hinter dem Flansch davon anstoßender Verstärkungsring mit kreisförmigem Querschnitt (7, 8, 32) vorgesehen ist, wobei der Verstärkungsring zur Verbindung mit dem Flansch eines anderen Rohres oder einem ähnlichen Verstärkungsring eines anderen Stummelflanschrohres angeglichen wird.

## Revendications

1. Un raccord entre deux tuyaux (1, 2, 23, 24), dont un au moins est un tuyau plastique, les tuyaux étant munis, sur les extrémités se faisant face, de brides annulaires se prolongeant vers l'extérieur (5, 6, 21, 22) offrant des surfaces d'accouplement (3, 4, 19, 20) entre les deux tuyaux et généralement normales par rapport à la direction des tuyaux ; un dispositif (7, 8, 35) pour raccorder les deux tuyaux destiné à rapprocher les surfaces d'accouplement des brides ; la bride (5, 6, 21, 22) du tuyau plastique (1, 2, 23, 24) ou de l'un au moins des tuyaux plastique étant une bride tronquée ; caractérisé en ce que la bride tronquée ou chaque bride tronquée (5, 6, 21, 22) porte un collier de support annulaire (15, 27, 28) fabriqué en un matériau relativement rigide destiné à assister le tuyau plastique à bride tronquée, ou chacun des tuyaux, à résister aux forces s'exerçant vers l'intérieur dans le sens radial, le collier (15, 27, 28) étant disposé dans une rainure annulaire (13, 14, 25, 26) dans la face d'accouplement (3, 4, 19, 20) de la bride tronquée ou de chaque bride tronquée (5, 6, 21, 22) du tuyau ou des tuyaux plastique (1, 2, 23, 24).

2. Un raccord, selon les stipulations de la revendication 1, qui se caractérise en ce que chaque tuyau bridé (1, 2, 23, 24) est un tuyau plastique et chaque bride (5, 6, 21, 22) est une bride tronquée portant un cercle de support annulaire (15, 17, 28) disposé dans une rainure annulaire (13, 14, 25, 26).

3. Un raccord, selon les stipulations de la revendication 1 ou 2, qui se caractérise en ce que la rainure annulaire (13, 14) dans la surface d'accouplement (19, 20) de la bride tronquée ou de chaque bride tronquée (21, 22) est munie d'un collier séparé (27, 28), dont l'une des surfaces se trouve généralement à ras avec la surface d'accouplement de la bride tronquée (21, 22).

4. Un raccord, selon les stipulations de la revendication 2, qui se caractérise en ce qu'un seul collier de support (15) est positionné dans des rainures annulaires juxtaposées (13, 14) dans les surfaces d'accouplement (3, 4) des deux brides tronquées (5, 6).

5. Un raccord, selon les stipulations de l'une quelconque des revendications précédentes, qui se caractérise en ce que le collier de support ou chaque collier de support (5, 6, 21, 22) se présente sous la forme d'un disque annulaire à face plate.

6. Un raccord, selon les stipulations de la revendication 5, qui se caractérise en ce que le dispositif d'étanchéité (16, 29) est incorporé au raccord entre les faces d'accouplement (3, 4, 19, 20) des tuyaux raccordés (1, 2, 23, 26) dans le sens radial interne des rainures annulaires (13, 14, 25, 26).

7. Un raccord, selon les stipulations de l'une quelconque des revendications précédentes, qui se caractérise en ce que le collier de support ou chaque collier de support (15, 27, 28) est dimensionné de telle sorte qu'il s'appuie contre les surfaces radiales externes de la rainure ou de chaque rainure (13, 14, 25, 26).

8. Un raccord, selon les stipulations des revendications 5, 6 ou 7 qui se caractérise en ce que la périphérie radiale externe du collier de support ou de chaque collier de support (15, 27, 28), est munie d'un bord chanfreiné incliné vers l'extérieur dans le plan radial et s'éloignant de la face d'accouplement (3, 4, 9, 20) de la bride (5, 6, 21, 22) et vient abouter contre une paroi externe de même inclinaison radiale dans la rainure.

9. Un raccord, selon les stipulations des revendications 5, 6 ou 7 qui se caractérise en ce que la périphérie radiale externe du collier de support ou de chaque collier de support (15, 27, 28), est munie d'un dispositif de retenue destiné à s'engager dans la paroi radiale externe de la rainure (13, 14, 25, 26).

10. Un raccord, selon les stipulations de l'une quelconque des revendications précédentes, qui se caractérise en ce qu'une bague d'appui annulaire (7, 8, 32) disposée autour du tuyau plastique à bride tronquée, ou de chaque tuyau plastique à bride tronquée (1, 2, 23, 24) et venant abouter derrière la bride tronquée (5, 6, 21, 22) de celui-ci, la bague d'appui ou chaque bague d'appui étant adaptée à des fins de raccordement avec la bague d'appui de l'autre bride tronquée, ou la bride de l'autre tuyau, selon le cas.

11. Un raccord, selon les stipulations de la revendication 10, qui se caractérise en ce que la bague d'appui, ou chaque bague d'appui (7, 8, 32) comprend une bague annulaire séparée (7, 8), munie d'orifices (11, 12) pour lui permettre de recevoir un dispositif de serrage pour tirer la bague d'appui (7, 8) contre la bride tronquée qui lui est associée (5, 6).

12. Un raccord, selon les stipulations de la revendication 10, dans lequel les deux tuyaux (23, 24) sont constitués de tuyaux plastique avec des brides tronquées (21, 22) et utilisent un couplage (32) ayant un élément de type manchon (35) et comportent des parois dirigées dans le sens radial interne de type jupe (33, 34), qui se caractérisent en ce que les bagues d'appui sont constituées par les parois latérales (33, 34) de l'élément de couplage de type manchon (35), les surfaces axiales arrière (31, 32) des brides tronquées (21, 22) étant façonnées de façon à se conformer à la configuration interne du couplage à manchon (32), le manchon étant positionné autour des brides tronquées (21, 22) des tuyaux plastique (23, 24) de telle manière que chacune des parois latérales vient se positionner fermement derrière chacune des deux brides tronquées (21, 22) des tuyaux plastique (23, 24).

13. Un tuyau plastique (1, 2, 23, 24), possédant à l'une des extrémités, une bride tronquée annulaire se prolongeant vers l'extérieur (5, 6, 21, 22) ayant une surface d'accouplement (3, 4, 19, 20) pour abouter, en utilisation, avec la surface d'accouplement correspondante d'un autre tuyau bridé, ladite surface d'acccouplement étant généralement normale par rapport au sens du tuyau ; caractérisé en ce que la bride tronquée du tuyau plastique porte un collier de support annulaire (15, 27, 28) fabriqué en un matériau relativement rigide destiné, en utilisation, à offrir au tuyau plastique à bride tronquée quand il est raccordé à un autre tuyau bridé, une résistance aux forces radiales internes présentes à l'intérieur de la bride tronquée plastique, le collier étant disposé dans une rainure annulaire (13, 14, 25, 26) dans la face d'accouplement (3, 4, 19, 20) de la bride tronquée (5, 6, 21, 27) du tuyau plastique (1, 2, 23, 24).

14. Un tuyau plastique (1, 2, 23, 24), selon les stipulations de la revendication 13, qui se caractérise en ce qu'une bague d'appui annulaire (7, 8, 32) est disposée autour du tuyau plastique à bride tronquée, et vient abouter derrière la bride de celui-ci, la bague d'appui (7, 8, 32) étant adaptée à des fins de raccordement avec la bride d'un autre tuyau, ou un anneau d'appui similaire d'un autre tuyau à bride tronquée.
